# EUROPEAN PATENT SPECIFICATION

(11) **EP 3 989 019 B1**
(45) Date of publication and mention of the grant of the patent: **06.09.2023**
(21) Application number: 21193597.8
(22) Date of filing: 27.08.2021
(51) Int. Cl.: G05B 19/10

(54) **POWER CONVERSION DEVICE AND METHOD FOR CONTROLLING POWER CONVERSION DEVICE**
STROMUMWANDLUNGSVORRICHTUNG UND VERFAHREN ZUR STEUERUNG DER STROMUMWANDLUNGSVORRICHTUNG
DISPOSITIF DE CONVERSION DE PUISSANCE ET PROCÉDÉ DE COMMANDE DE DISPOSITIF DE CONVERSION DE PUISSANCE

(30) Priority: 26.10.2020 JP 2020179023
(43) Date of publication of application: 27.04.2022
(73) Proprietor: Fuji Electric Co., Ltd., Kawasaki-shi, Kanagawa 210-9530 (JP)
(72) Inventor: ADACHI, Taketo, Kanagawa, 210-9530 (JP)
(74) Representative: Appelt, Christian W.

(56) References cited:
- EP-A1- 3 396 050
- JP-A- 2005 354 778
- US-A1- 2018 107 170
- Fuji Electric: "Instruction Manual "New simple Inverter FVR-Micro"", , 30 September 2013 (2013-09-30), pages 1-79, XP055850002, Retrieved from the Internet: URL:https://felib.fujielectric.co.jp/docfe tch/CustomContentDownload.aspx?sid=21A3016 20702AA98E962C9961C3F131FF5783894BAA39138& dataid=26689391&version=0&site=global&lang =en [retrieved on 2021-10-11]
- Fvr-Micro: "Advanced simple Inverter Instruction Manual 2017 Fuji", , 31 December 2017 (2017-12-31), pages 1-128, XP055907464, Retrieved from the Internet: URL:https://felib.fujielectric.co.jp/docfe tch/CustomContentDownload.aspx?sid=48E54C1 FA1CD36F00AFDFFF7989D4F94BA0AD633E30F44B8& dataid=26689391&version=0&site=global&lang =en [retrieved on 2022-03-31]

## Description

### Technical Field

The disclosures relate to a power conversion device and a method for controlling the power conversion device.

### Background Art

Power conversion devices that convert alternating currents input from commercial power sources, or the like and supply alternating currents with different frequencies to loads such as electric motors, or the like, have been known. The power conversion devices are provided with digital input terminals. The power conversion devices perform controls of starting or ending operations, changing frequencies of alternating currents to be output, or the like, according to control signals input to the digital input terminals.

Japanese Laid-open Patent Publication No. 2005-354778 discloses an inverter device (power conversion device) functions of which are variable in response to inputs from an input device.

Fuji Electric: "Instruction Manual: New simple Inverter FVR-Micro", pages 1-79, XP055850002, https://felib.fujielectric.co.jp describes a changed speed operation device which is configured to control a three-phase induction motor.

EP 3 39650 Al describes a household appliance comprising a controller to control the operation of the household appliance and an input unit providing input elements that are actuatable by a user of the household appliance. The input elements comprise at least a power-off-button that is implemented as a physical input element. The input unit is coupled to the controller. The household appliance is operable in at least a main operating mode and in a service mode in which at least one service function that is not available in the main operating mode is provided to a user of the household appliance. The controller is configured to operate the household appliance in the service mode upon receiving from the input unit a user input that corresponds to the actuation of one or more input elements according to a first predetermined input sequence, wherein the first predetermined input sequence comprises an actuation of the power-off-button.

### Summary of the Invention

### Problems to be Solved by the Invention

In order to use the digital input terminal of the power conversion device, it is necessary to provide an external switch. Moreover, the external switch and the digital input terminal are required to be wired.

The present disclosure provides a power conversion device capable of easily performing an input that is the same as the input from the digital input terminal.

### Means for Solving Problem

The present invention relates to a power conversion device according to claim 1 and a method according to claim 8. Claims 2 to 7 refer to specifically advantageous realizations of the power conversion device according to claim 1.

### Advantageous Effects of Invention

According to the power conversion device of the present disclosure, an input that is the same as the input from the digital input terminal can be performed easily.

### Brief Description of Drawings

[FIG. 1] FIG. 1 is a block diagram illustrating a power conversion device according to an embodiment of the present disclosure.
[FIG. 2] FIG. 2 is a diagram illustrating a front view of a manipulation unit of the power conversion device according to the embodiment of the present disclosure.
[FIG. 3] FIG. 3 is a flowchart illustrating a procedure performed by a controller of the power conversion device according to the embodiment of the present disclosure.

### Description of Embodiments

Hereinafter, each embodiment of the present disclosure will be described with reference to the accompanying drawings. With regard to the description and drawings in accordance with each embodiment, for components having substantially the same or corresponding functional configuration, an overlapping description may be omitted by giving the same reference numerals. Moreover, in order to facilitate understanding of the invention, the scale of parts in the drawings may differ from a scale of actual cases.

### <<Power conversion device 1>>

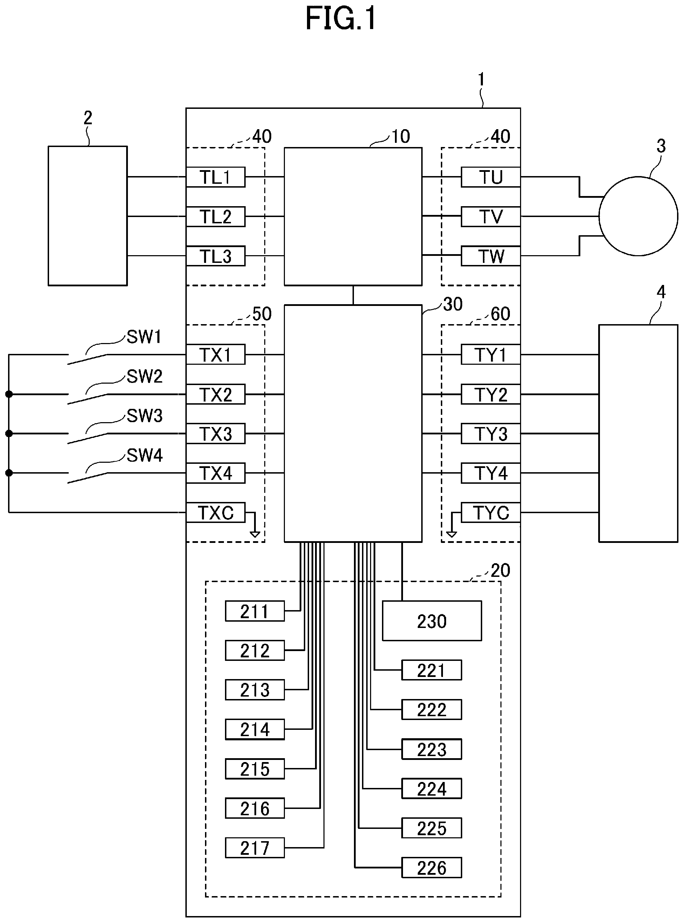

FIG. 1 is a block diagram depicting a power conversion device 1 according to an embodiment of the present disclosure. The power conversion device 1, for example, converts a three-phase alternating current supplied from a power source 2 into a direct current inside the power conversion device 1. Then, the power conversion device 1 converts the direct current into an alternating current with a predetermined frequency, and supplies an electric power to a load 3, such as an electric motor.

The power conversion device 1 is provided with a power converter 10, a manipulation unit 20, a controller 30, a power source terminal unit 40, an input terminal unit 50, and an output terminal unit 60.

### <Power converter 10>

The power converter 10 converts a three-phase alternating current supplied form the power source 2 into a direct current inside the power converter 10. Then, the power converter 10 converts the converted direct current into an alternating current with a predetermined frequency.
Furthermore, the power converter 10 supplies electric power to the load 3.

The power source 2 is what is called a commercial power source. The power source 2 supplies a three-phase alternating current, for example. Voltages of the electric power supplied from the power source 2 are, for example, 200 V or 400 V. Frequencies of the electric power supplied from the power source 2 are, for example, 50 Hz or 60 Hz. The above-described voltages and the above-described frequencies are shown as an example, and another voltage and another frequency may be used.

Moreover, the alternating current supplied from the power source 2 is not limited to a three-phase alternating current, and may be a single-phase alternating current or a two-phase alternating current. Furthermore, the electric current supplied from the power source 2 is not limited to an alternating current, and may be a direct current.

In the power conversion device 1, the power source terminal unit 40 is provided with power source input terminals TL1, TL2 and TL3 and the power source output terminals TU, TV, and TW. The electric power supplied from the power source 2 is supplied to the power converter 10 of the power conversion device 1 via the power source input terminals TL1, TL2 and TL3 of the power source terminal unit 40, respectively.

The electric power supplied from the power source 2 to the power converter 10 is rectified by a converter circuit configured by a diode bridge, or the like, and converted into direct currents, inside the power converter 10. The converted direct currents are converted into alternating currents with desired frequencies by, for example, an inverter circuit configured by a switching element, such as an insulated gate bipolar transistor (IGBT).

The alternating currents obtained by converting in the power converter 10 and output from the power converter 10 are supplied to the load 3 via the power source output terminals TU, TV, and TW of the power source terminal unit 40, respectively.

The load 3 is, for example, an electric motor, such as a three-phase motor.

For example, according to the conversion of the frequencies of the electric power supplied from the electric power source 2 to the load 3 by the power converter 10 of the power conversion device 1, a rotational speed or the like of the electric motor, which is the load 3, can be controlled.

### <Manipulation unit 20>

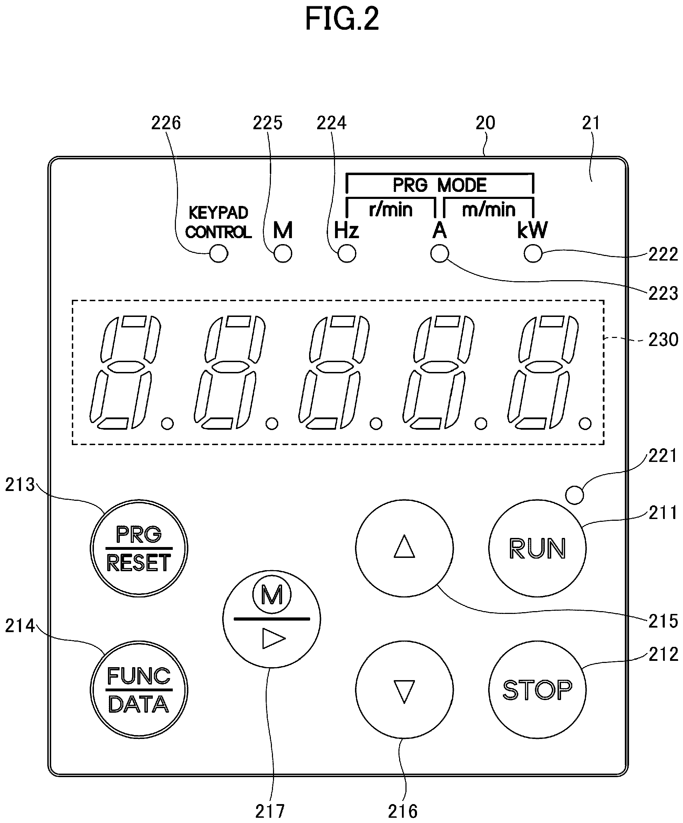

The manipulation unit 20 is configured to receive a manipulation activity by an operator, to activate or stop the operation of the power conversion device, or change settings. FIG. 2 is a diagram illustrating a front view of the manipulation unit 20 of the power conversion device 1 of the embodiment.

The manipulation unit 20 has a touch panel 21 provided with seven manipulation keys 211 to 217, six light emitting elements 221 to 226, and a monitor of seven segment LED displays for five characters 230.

### [Manipulation keys]

The manipulation unit 20 is provided with manipulation keys including a run key 211, a stop key 212, a program reset key 213, a function data key 214, an upward arrow key 215, a downward arrow key 216, and a multifunction key 217.

The run key 211 is pressed for starting an operation of the power conversion device 1. Specifically, when the run key 211 is pressed, the power conversion device 1 starts its operation. When the power conversion device 1 starts its operation, a supply of an alternating current with a predetermined frequency is started from the power source output terminals TU, TV, and TW of the power source terminal unit 40 to the load 3. For example, when the load 3 is an electric motor, the electric motor starts its rotation. While the power conversion device 1 operates, an operation LED lamp 221, which will be described later, is lighted.

The stop key 212 is pressed for stopping the operation of the power conversion device 1. Specifically, when the stop key 212 is pressed, the power conversion device 1 stops its operation. When the power conversion device 1 stops its operation, the supply of the electric power from the power source output terminals TU, TV and TW of the power source terminal unit 40 to the load 3 is stopped. For example, when the load 3 is an electric motor, a rotation of the electric motor is stopped. When the operation of the power conversion device 1 is stopped, the operation LED lamp 221, which has been lighted, is turned off.

The program reset key 213 is pressed for switching a manipulation mode.

The manipulation modes of the power conversion device 1 include, for example, three modes, i.e. a run mode, a program mode, and an alarm mode. In the run mode, a frequency and an instruction value are set, and a start instruction and a stop instruction are performed. In the program mode, a function setting and a state of the device are checked. In the alarm mode, a content of an alarm generated when the alarm was issued is displayed.

When the program reset key 213 is pressed during the run mode, the manipulation mode is switched from the run mode to the program mode. When the program reset key 213 is pressed during the program mode, the manipulation mode is switched from the program mode to the run mode. When the program reset key 213 is pressed during the alarm mode after a cause of the alarm is removed, the manipulation mode is switched from the alarm mode to the run mode.

The function data key 214 is pressed for switching displayed information or determining a selection of the displayed information. When the function data key 214 is pressed during the run mode, displayed items for monitoring in the operation state, e.g. an output frequency, an output current, an output voltage, or the like, are switched. When the function data key 214 is pressed during the program mode, data displayed on the monitor of seven segment LED displays 230 are determined. When the function data key 214 is pressed during the alarm mode, displayed items of the alarm information are switched.

The upward arrow key 215 and the downward arrow key 216 are pressed for selecting setting items or the displayed items displayed on the monitor of seven segment LED displays 230 or changing numerical values displayed on the monitor.

The multifunction key 217 has a function which is different depending on a state in which the multifunction key 217 is pressed. For example, when the multifunction key 217 is pressed for less than one second, a cursor displayed on the monitor of seven segment LED displays 230 moves. Moreover, for example, when the multifunction key 217 is pressed for one second or more, the controller 30 performs a process for an input which has been set.

### [Light Emitting Element]

The manipulation unit 20 is provided with light emitting elements including an operation LED lamp 221, unit LED lamps 222, 223 and 224, a multidisplaying LED lamp 225, and a keypad control LED lamp 226.

The operation LED lamp 221 is lighted when the power conversion device 1 operates, and is off when the power conversion device 1 does not operate.

The unit LED lamps 222, 223, and 224 express a kind of a physical quantity (item to be monitored) and a unit for a numerical value displayed on the monitor of seven segment LED displays 230, in the run mode. Moreover, the unit LED lamps 222, 223, and 224 are also used for indicating that the manipulation mode is the program mode.

For example, when only the unit LED lamp 222 is lighted, the item to be monitored is "power consumption" and the unit is "kW". When only the unit LED lamp 223 is lighted, the item to be monitored is "output current" and the unit is "A". When only the unit LED lamp 224 is lighted, the item to be monitored is "output frequency" and the unit is "Hz".

Moreover, when the unit LED lamps 222 and 223 are lighted and the unit LED lamp 224 is off, the item to be monitored is a "line velocity" and the unit is "m/minute". When the unit LED lamps 223 and 224 are lighted and the unit LED lamp 222 is off, the item to be monitored is a "motor rotational speed" or a "load rotational speed" and the unit is "revolution/minute".

Furthermore, when the unit LED lamps 222 and 224 are lighted and the unit LED lamp 223 is off, the manipulation mode is the program mode.

The multidisplaying LED lamp 225 has a function of displaying which varies according to a setting.

The keypad control LED lamp 226 indicates that the run key 211 of the touch panel 21 is active.

### [Monitor of seven segment LED displays]

The monitor of seven segment LED displays 230 displays numerical values or the setting items.

### <Controller 30>

The controller 30 controls the power conversion device 1. The controller 30 is provided with, for example, a central processing unit (CPU) and a storage unit such as a memory, which are not shown. The controller 30 reads out a program stored in the storage unit and executes the program, and thereby performs a desired process in the power conversion device 1.

The controller 30 receives an input from each of the digital input terminals TX1, TX2, TX3 and TX4 of the input terminal unit 50. Each of the digital input terminals TX1, TX2, TX3 and TX4 is a programmable and general-purpose digital input terminal.

To each of the digital input terminals TX1, TX2, TX3 and TX4 of the input terminal unit 50, an input signal of either ON or OFF is input. The power conversion device 1 according to the embodiment of the present application determines a conduction or a non-conduction between an input common terminal TXC and each of the digital input terminals TX1, TX2, TX3 and TX4. Then, the power conversion device 1 according to the embodiment of the present application determines that the input signal from each of the digital input terminals TX1, TX2, TX3 and TX4 is ON or OFF, according to whether it is conductive or non-conductive between the input common terminal TXC and the digital input terminal. For example, the power conversion device 1 determines that the input signal is ON when it is conductive between the digital input terminal and the input common terminal, and that the input signal is OFF when it is non-conductive between the digital input terminal and the input common terminal.

An operator can select an input process to be assigned to each of the digital input terminals TX1, TX2, TX3 and TX4 from among a plurality of candidates for the input process according to a setting. For example, the controller 30 can assign a process of a function listed in TABLE 1 to each of the digital input terminals TX1, TX2, TX3 and TX4. The process assigned to each of the digital input terminals TX1, TX2, TX3 and TX4 by the controller 30 is an example of a first process.

It is noted that the input signal of either ON or OFF is not limited to the above-described signal determined according to whether being conductive or being non-conductive, but may be an electric voltage signal, an electric current signal, a frequency signal, or the like.

**[TABLE 1]**

| Function that can be set to digital input terminal and multifunction key |
|---|
| Multistage frequencies selection (0 to 1 stages) |
| Multistage frequencies selection (0 to 3 stages) |
| Multistage frequencies selection (0 to 7 stages) |
| Multistage frequencies selection (0 to 15 stages) |
| Acceleration/deceleration selection (2 stages) |
| Acceleration/deceleration selection (4 stages) |
| Self-holding selection |
| Free-running instruction |
| Alarm (abnormality) reset |
| External alarm |
| Jogging operation |
| Etc. |

The controller 30 outputs an output signal from each of digital output terminals TY1, TY2, TY3 and TY4 of the output terminal unit 60. Each of the digital output terminals TY1, TY2, TY3 and TY4 is a programmable and general-purpose digital output terminal.

From each of the digital output terminals TY1, TY2, TY3 and TY4 of the output terminal unit 60, an output signal of either ON or OFF is output. The power conversion device 1 according to the embodiment of the present application outputs an output signal from each of the digital output terminals TY1, TY2, TY3 and TY4 according to whether it is conductive or non-conductive between an output common terminal TYC and each of the digital output terminals TY1, TY2, TY3 and TY4. For example, the power conversion device 1 outputs the output signal of ON when it is conductive between the digital output terminal and the output common terminal, and outputs the output signal of OFF when it is non-conductive between the digital output terminal and the output common terminal.

The power conversion device 1 according to the embodiment of the present application switches between a conduction and a non-conduction between the output common terminal TYC and the digital output terminals TY1, TY2, TY3 and TY4 by switches SW1, SW2, SW3 and SW4, respectively.

The operator can select an output process to be assigned to each of the digital output terminals TY1, TY2, TY3 and TY4 from among a plurality of candidates for the output process according to a setting. For example, the controller 30 can assign a process of a function listed in TABLE 2 to each of the digital output terminals TY1, TY2, TY3 and TY4.

**[TABLE 2]**

| Function that can be set to output terminal and multidisplaying LED lamp |
|---|
| In operation |
| Reach frequency (speed) |
| Detect frequency (speed) |
| During stop due to undervoltage |
| Detect torque polarity |
| During limitation of inverter output |
| During operation of power recovery from instantaneous power failure |
| Etc. |

Each of the digital output terminals TY1, TY2, TY3 and TY4 is connected, for example, to an external device 4. The external device 4 includes, for example, a displaying LED lamp or a programmable logic controller.

Furthermore, the controller 30 can assign the process of the function listed in TABLE 1 to the multifunction key 217. Moreover, the controller 30 can assign the process of the function listed in TABLE 2 to the multidisplaying LED lamp 225. That is, the operator can select a display process to be assigned to the multidisplaying LED lamp 225 from among a plurality of candidates for the display process according to a setting. The multidisplaying LED lamp 225 is an example of a display element. The process performed by the multidisplaying LED lamp 225 is an example of a display process recited in claims.

It is noted that the output signal of either ON or OFF is not limited to the above-described signal determined according to whether being conductive or being non-conductive, but may be an electric voltage signal, an electric current signal, a frequency signal, or the like.

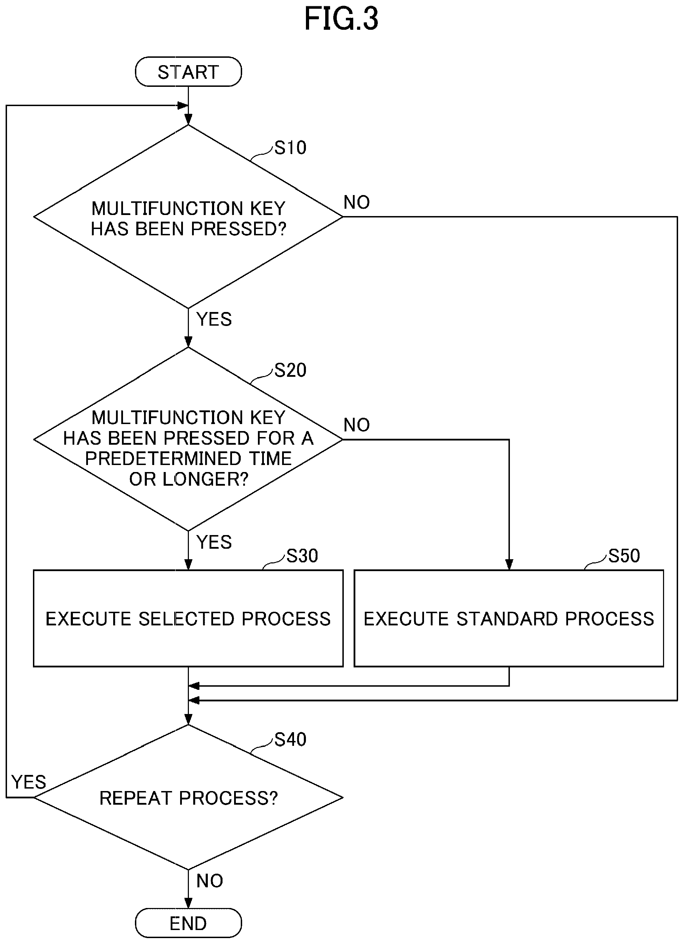

Next, a procedure performed by the controller 30 when the multifunction key 217 is pressed, i.e. a method for controlling the power conversion device 1 will be described. FIG. 3 is a flowchart for explaining processes when the multifunction key 217 of the controller 30 of the power conversion device 1 according to the embodiment of the present application is pressed.

When the procedure starts, the controller 30 determines whether the multifunction key 217 is pressed (Step S10). When the multifunction key 217 is not pressed (Step S10: NO), the controller 30 proceeds to Step S40.

When the multifunction key 217 is determined to be pressed (Step S10: YES), the controller 30 further determines whether the multifunction key 217 is continuously pressed for a predetermined time, e.g. one second (long pressed), or more (Step S20).

When the multifunction key 217 is pressed for one second or more (long pressed) (Step S20: YES), the controller 30 toggles the input signal between ON and OFF for the process selected for the multifunction key 217 from among the plurality of candidates for the input process according to a setting (Step S30). That is, at Step S30, the controller 30 performs the input process selected from among the plurality of candidates for the input process according to the setting. Then, the controller 30 proceeds to Step S40.

In addition, at Step S30, the controller 30 may display for a moment "On" on the monitor of seven segment LED displays 230 when the input signal is ON, and "Off" when the input signal is OFF. That is, the controller 30 may indicate on the monitor of seven segment LED displays 230 that the multifunction key 217 was continuously pressed for the predetermined time or more. The monitor of seven segment LED displays 230 is an example of a display unit.

On the other hand, when the multifunction key 217 is pressed for less than the predetermined time, e.g. not pressed for one second or more (not long pressed) (Step S20: NO), the controller 30 performs an input process that is previously set (step S50). Then, the controller 30 proceeds to Step S40.

At Step S40, the controller 30 determines whether to continue the procedure. When the procedure is determined to be continued (Step S40: YES), the controller 30 returns to Step S10, and the above-described processes are repeated. When the procedure is determined not to be continued (Step S40: NO), the procedure ends.

It is noted that the multifunction key 217 is an example of a first manipulation key. The process performed at Step S50 is an example of a standard process. The process performed at Step S30 is an example of a second process or a selected process. Moreover, the set of Step S20, Step S30 and Step S50 is an example of a procedure of performing either the standard process or the selected process according to the state where the first manipulation key is pressed.

Although the power conversion device 1 according to the embodiment of the present application determines whether the multifunction key 217 is continuously pressed for a predetermined time, the present invention is not limited to this. For example, the selected process may be performed when the multifunction key 217 and another key are simultaneously pressed. The other key pressed simultaneously with the multifunction key is an example of a second manipulation key. Moreover, for example, the selected process may be performed when the multifunction key is pressed a plurality of times (e.g. twice or more) within a predetermined period (e.g. 0.5 seconds).

### <Effect of the invention>

The power conversion device 1 according to the invention performs, when the multifunction key 217 is pressed, either the standard process previously set or the selected process selected from among the plurality of input process candidates by the setting according to the state in which the multifunction key 217 is pressed. Thus, the multifunction key 217 can be used for the case of performing the standard process or the case of performing the selected process selectively.

Because the multifunction key 217 can be used for the case of performing the standard process or the case of performing the selected process selectively, the operator can instruct the power conversion device 1 to perform the selected process without adding a new key to the touch panel 21.

Moreover, by using the multifunction key 217, the power conversion device 1 according to the embodiment of the present application can perform a process selected from among the plurality of input process candidates according to the setting without preparing and wiring a switch.

Furthermore, the power conversion device 1 according to the embodiment of the present application can perform the same process as the process selected from among the plurality of input process candidates according to the setting, which is assigned to any of the digital input terminals TX1, TX2, TX3 and TX4, by using the multifunction key 217. By making the process assigned to the digital input terminal the same as the process assigned to the multifunction key 217, the power conversion device 1 can perform processes simulating the digital input terminals.

The power conversion device 1 according to the embodiment of the present application is provided with the plurality of manipulation keys. Although the power conversion device 1 according to the embodiment has one multifunction key among the plurality of manipulation keys, the power conversion device 1 may be provided with a plurality of manipulation keys that operate as multifunction keys. That is, when at least any one of the manipulation keys of the power conversion device 1 according to the embodiment is pressed, the pressed manipulation key may function as a multifunction key.

It is noted that the embodiments of the present application disclosed as above are considered to be illustrative in all respects, and not restrictive. The above-described embodiments may be omitted, replaced, or changed in various forms without departing from the scope of the claims of the present invention.

This application is based on Japanese Patent Application No. 2020-179023, filed October 26, 2020.

## Claims

1. A power conversion device (1) comprising:
an input terminal (50) to which an input signal of either ON or OFF can be input;
a manipulation unit (20) having a touch panel (21) provided with a first manipulation key (217) configured to be pressed by an operator; and
a controller (30),
wherein the controller (30) is configured to execute a first process selected from among a plurality of input process candidates by a setting according to the input signal input to the input terminal (50), **characterized by**:
when the first manipulation key (217) is pressed by the operator, the controller (30) is configured to execute either a standard process previously set or a second process selected from among the plurality of input process candidates by the setting, according to a state in which the first manipulation key (217) is pressed by the operator.

2. The power conversion device (1) according to claim 1,
wherein when the first manipulation key (217) is pressed continuously for a predetermined time or more, the controller (30) is configured to execute the second process, and
wherein when the first manipulation key (217) is pressed continuously for less than the predetermined time, the controller (30) is configured to execute the standard process.

3. The power conversion device (1) according to claim 2 further comprising:
a display unit (230),
wherein when the first manipulation key (217) is pressed continuously for the predetermined time or more, the controller (30) is configured to indicate on the display unit (230) that the first manipulation key (217) has been pressed continuously for the predetermined time or more.

4. The power conversion device (1) according to one of the claims 1 to 3 further comprising:
a second manipulation key (211,212,213,214,215,216) configured to receive a manipulation activity by the operator,
wherein when the first manipulation key (217) and the second manipulation key (211,212,213,214,215,216) are pressed simultaneously, the controller (30) is configured to execute the second process, and
wherein when the first manipulation key (217) is pressed and the second manipulation key (211,212,213,214,215,216) is not pressed, the controller (30) is configured to execute the standard process.

5. The power conversion device (1) according to one of the claims 1 to 4 further comprising:
a plurality of manipulation keys (217) each configured to receive a manipulation activity by the operator,
wherein when at least any one of the plurality of manipulation keys (217) is pressed, the controller (30) is configured to execute either a standard process previously set or a second process selected from among the plurality of input process candidates by the setting, according to a state in which at least any one of the plurality of manipulation keys (217) is pressed.

6. The power conversion device (1) according to one of the claims 1 to 5, wherein
the second process is the same as the first process.

7. The power conversion device (1) according to one of the claims 1 to 6 further comprising:
a display element (225),
wherein the controller (30) is configured to execute a display process selected from among a plurality of candidates for the display process by the setting.

8. A method for controlling a power conversion device (1) according to any of claims 1-7, **characterized by**:
a step of executing, when the first manipulation key (217) is pressed by the operator, by the controller (30), either a standard process previously set or a second process selected from among a plurality of input process candidates by the setting, according to a state in which the first manipulation key (217) is pressed by the operator.

## Patentansprüche

1. Stromumwandlungsvorrichtung (1), umfassend:
einen Eingabeanschluss (50), in den ein Eingabesignal von entweder EIN oder AUS eingegeben werden kann;
eine Manipulationseinheit (20) mit einem Bedienfeld (21), das mit einer ersten Manipulationstaste (217) versehen ist, die konfiguriert ist, von einer Bedienperson gedrückt zu werden; und
eine Steuerung (30),
wobei die Steuerung (30) konfiguriert ist, einen ersten Prozess auszuführen, der durch eine Einstellung gemäß dem Eingabesignal, das in den Eingabeanschluss (50) eingegeben wird, aus mehreren Eingabeprozesskandidaten ausgewählt wird, **gekennzeichnet dadurch:**
**dass**, wenn die erste Manipulationstaste (217) durch die Bedienperson gedrückt wird, die Steuerung (30) konfiguriert ist, entweder einen zuvor konfigurierten Standardprozess oder einen zweiten Prozess auszuführen, der durch die Einstellung aus den mehreren Eingabeprozesskandidaten ausgewählt wird, gemäß einem Zustand, in dem die erste Manipulationstaste (217) durch die Bedienperson gedrückt wird.

2. Stromumwandlungsvorrichtung (1) nach Anspruch 1,
wobei, wenn die erste Manipulationstaste (217) für eine vorbestimmte Zeit oder länger kontinuierlich gedrückt wird, die Steuerung (30) konfiguriert ist, den zweiten Prozess auszuführen, und
wobei, wenn die erste Manipulationstaste (217) kontinuierlich für weniger als die vorbestimmte Zeit gedrückt wird, die Steuerung (30) konfiguriert ist, den Standardprozess auszuführen.

3. Stromumwandlungsvorrichtung (1) nach Anspruch 2, ferner umfassend:
eine Anzeigeeinheit (230),
wobei, wenn die erste Manipulationstaste (217) für die vorbestimmte Zeit oder länger kontinuierlich gedrückt wird, die Steuerung (30) konfiguriert ist, auf der Anzeigeeinheit (230) anzuzeigen, dass die erste Manipulationstaste (217) für die vorbestimmte Zeit oder länger kontinuierlich gedrückt wurde.

4. Stromumwandlungsvorrichtung (1) nach einem der Ansprüche 1 bis 3, ferner umfassend:
eine zweite Manipulationstaste (211, 212, 213, 214, 215, 216), die konfiguriert ist, eine Manipulationsaktivität durch die Bedienperson zu empfangen,
wobei, wenn die erste Manipulationstaste (217) und die zweite Manipulationstaste (211, 212, 213, 214, 215, 216) gleichzeitig gedrückt werden, die Steuerung (30) konfiguriert ist, den zweiten Prozess auszuführen, und
wobei, wenn die erste Manipulationstaste (217) gedrückt wird und die zweite Manipulationstaste (211, 212, 213, 214, 215, 216) nicht gedrückt wird, die Steuerung (30) konfiguriert ist, den Standardprozess auszuführen.

5. Stromumwandlungsvorrichtung (1) nach einem der Ansprüche 1 bis 4, ferner umfassend:
mehrere Manipulationstasten (217), die jeweils konfiguriert sind, eine Manipulationsaktivität durch die Bedienperson zu empfangen,
wobei, wenn mindestens eine der mehreren Manipulationstasten (217) gedrückt wird, die Steuerung (30) konfiguriert ist, entweder einen zuvor eingestellten Standardprozess oder einen zweiten Prozess auszuführen, der durch die Einstellung aus den mehreren Eingabeprozesskandidaten ausgewählt wird, gemäß einem Zustand, in dem mindestens eine der mehreren Manipulationstasten (217) gedrückt wird.

6. Stromumwandlungsvorrichtung (1) nach einem der Ansprüche 1 bis 5, wobei
der zweite Prozess der gleiche ist wie der erste Prozess.

7. Stromumwandlungsvorrichtung (1) nach einem der Ansprüche 1 bis 6, ferner umfassend:
ein Anzeigeelement (225),
wobei die Steuerung (30) konfiguriert ist, einen Anzeigeprozess auszuführen, der durch die Einstellung aus mehreren Kandidaten für den Anzeigeprozess ausgewählt wird.

8. Verfahren zur Steuerung einer Stromumwandlungsvorrichtung (1) nach einem der Ansprüche 1 bis 7, **gekennzeichnet durch**:
einen Schritt des Ausführens, **durch** die Steuerung (30), wenn die erste Manipulationstaste (217) **durch** die Bedienperson gedrückt wird, von entweder einem zuvor eingestellten Standardprozess oder einem zweiten Prozess, der **durch** die Einstellung aus mehreren Eingabeprozesskandidaten ausgewählt wird, gemäß einem Zustand, in dem die erste Manipulationstaste (217) **durch** die Bedienperson gedrückt wird.

## Revendications

1. Dispositif de conversion de puissance (1), comprenant :
une borne d'entrée (50) à laquelle un signal d'entrée, qui peut être actif ou inactif, peut être appliqué en entrée ;
une unité de manipulation (20) présentant un panneau tactile (21) pourvu d'une première touche de manipulation (217) configurée de manière à être pressée par un opérateur ; et
un contrôleur (30) ;
dans lequel le contrôleur (30) est configuré de manière à exécuter un premier processus sélectionné parmi une pluralité de candidats de processus d'entrée, par le biais d'une étape de définition, selon le signal d'entrée appliqué en entrée à la borne d'entrée (50), **caractérisé en ce que** :
lorsque la première touche de manipulation (217) est pressée par l'opérateur, le contrôleur (30) est configuré de manière à exécuter soit un processus standard précédemment défini, soit un second processus sélectionné parmi la pluralité de candidats de processus d'entrée, par le biais de l'étape de définition, selon un état dans lequel la première touche de manipulation (217) est pressée par l'opérateur.

2. Dispositif de conversion de puissance (1) selon la revendication 1,
dans lequel, lorsque la première touche de manipulation (217) est pressée de manière continue pendant un temps prédéterminé ou plus, le contrôleur (30) est configuré de manière à exécuter le second processus ; et
dans lequel, lorsque la première touche de manipulation (217) est pressée de manière continue pendant un temps inférieur au temps prédéterminé, le contrôleur (30) est configuré de manière à exécuter le processus standard.

3. Dispositif de conversion de puissance (1) selon la revendication 2, comprenant en outre :
une unité d'affichage (230),
dans laquelle, lorsque la première touche de manipulation (217) est pressée de manière continue pendant le temps prédéterminé ou plus, le contrôleur (30) est configuré de manière à indiquer, sur l'unité d'affichage (230), que la première touche de manipulation (217) a été pressée de manière continue pendant le temps prédéterminé ou plus.

4. Dispositif de conversion de puissance (1) selon l'une quelconque des revendications 1 à 3, comprenant en outre :
une seconde touche de manipulation (211, 212, 213, 214, 215, 216) configurée de manière à recevoir une activité de manipulation de la part de l'opérateur ;
dans lequel, lorsque la première touche de manipulation (217) et la seconde touche de manipulation (211, 212, 213, 214, 215, 216) sont pressées simultanément, le contrôleur (30) est configuré de manière à exécuter le second processus ; et
dans lequel, lorsque la première touche de manipulation (217) est pressée et que la seconde touche de manipulation (211, 212, 213, 214, 215, 216) n'est pas pressée, le contrôleur (30) est configuré de manière à exécuter le processus standard.

5. Dispositif de conversion de puissance (1) selon l'une quelconque des revendications 1 à 4, comprenant en outre :
une pluralité de touches de manipulation (217), configurées chacune de manière à recevoir une activité de manipulation de la part de l'opérateur ;
dans lequel, lorsqu'au moins l'une quelconque des touches de manipulation (217) est pressée, le contrôleur (30) est configuré de manière à exécuter soit un processus standard précédemment défini, soit un second processus sélectionné parmi la pluralité de candidats de processus d'entrée par le biais de l'étape de définition, selon un état dans lequel au moins l'une quelconque de la pluralité de touches de manipulation (217) est pressée.

6. Dispositif de conversion de puissance (1) selon l'une quelconque des revendications 1 à 5, dans lequel :
le second processus est le même que le premier processus.

7. Dispositif de conversion de puissance (1) selon l'une quelconque des revendications 1 à 6, comprenant en outre :
un élément d'affichage (225) ;
dans lequel le contrôleur (30) est configuré de manière à exécuter un processus d'affichage sélectionné parmi une pluralité de candidats pour le processus d'affichage, par le biais de l'étape de définition.

8. Procédé de commande d'un dispositif de conversion de puissance (1) selon l'une quelconque des revendications 1 à 7, **caractérisé par** :
une étape consistant à exécuter, lorsque la première touche de manipulation (217) est pressée par l'opérateur, par le biais du contrôleur (30), soit un processus standard précédemment défini, soit un second processus sélectionné parmi une pluralité de candidats de processus d'entrée par le biais de l'étape de définition, selon un état dans lequel la première touche de manipulation (217) est pressée par l'opérateur.
